# EUROPEAN PATENT SPECIFICATION

(11) **EP 3 594 375 B1**
(45) Date of publication and mention of the grant of the patent: **27.01.2021**
(21) Application number: 18182336.0
(22) Date of filing: 09.07.2018
(51) Int. Cl.: C22C 38/02, C23C 8/80, C23C 8/32, C23C 8/26, C23C 8/20, C22C 38/04, C22C 38/44, C22C 38/46, C22C 38/48, C22C 38/52, F16C 33/62

(54) **STEEL ALLOY, BEARING COMPONENT, BEARING, PROCESS FOR THE MANUFACTURE OF A BEARING COMPONENT**
STAHLLEGIERUNG, LAGERTEIL, LAGER, VERFARHREN ZUR HERSTELLUNG EINES LAGERTEILS
ALLIAGE D'ACIER, COMPOSANT DE PALIER, PALIER, PROCÉDÉ DE FABRICATION D'UN COMPOSANT DE PALIER

(43) Date of publication of application: 15.01.2020
(73) Proprietor: Aktiebolaget SKF, 41 550 Göteborg (SE); SKF Aerospace France, 78180 Montigny-le-Bretonneux (FR)
(72) Inventor: Kerrigan, Aidan, 3583 AG Utrecht (NL); Beswick, John, 3417 WX Montfoort (NL); Sherif, Mohamed, 1211 GZ Hilversum (NL); Mondelin, Alexandre, 26320 St-Marcel Les Valence (FR); Maheo, Yves, 26140 Anneyron (FR)
(74) Representative: Schonecke, Mitja

(56) References cited:
- US-A- 5 873 956
- US-A1- 2016 273 587
- US-A1- 2018 073 113
- GRANT, DARRELL H. ET AL.: "High temperature aircraft turbine engine bearing and lubrication system development High temperature aircraft turbine engine bearing and lubrication system development", ASTM SPECIAL TECHNICAL PUBLICATION, vol. STP 1327, 1 January 1998 (1998-01-01) , pages 409-434, XP009509364, ISSN: 0066-0558, DOI: 10.1520/STP12142S

## Description

### Technical field

The present invention relates to the field of steels and bearings. More specifically, the present invention relates to a novel steel alloy, a method of forming a bearing component and a bearing comprising such a component.

### Background

Bearings are devices that permit constrained relative motion between two parts. Rolling element bearings comprise inner and outer raceways and a plurality of rolling elements (balls or rollers) disposed therebetween. For long-term reliability and performance it is important that the various elements have a high resistance to rolling contact fatigue, wear and creep. Bearings for aerospace applications are typically required to operate under high loads and extreme temperatures in an environment that may be exposed to moisture. Such components therefore need to possess an optimal combination of toughness, high-temperature capability and corrosion resistance, in addition to excellent case hardness and core ductility.

Stainless steels are known and typically contain a minimum of 10 wt.% Cr to achieve the desired corrosion resistance. For example, Pyrowear® 675 stainless steel is a carburising, corrosion-resistant steel designed to provide a case hardness in excess of HRC 60 combined with a tough, ductile core. Pyrowear® 675 stainless has been used in bearing and gearing type applications. Pyrowear® 675 stainless contains approximately 0.07 wt.% carbon and 13 wt.% chromium as well as molybdenum, vanadium, nickel, cobalt, silicon, manganese and iron. An example of a case-hardenable corrosion-resistant alloy used for aircraft bearings is disclosed in EP0411931.

Typically, bearings are all-steel bearings; that is, the bearing rings and the rolling elements are made of steel. A hybrid bearing is a bearing which has steel bearing rings and ceramic rolling elements. The use of ceramic rolling elements increases the load-carrying capacity of a bearing, but in order to fully utilize the load capacity of the ceramic rolling elements, the steel surfaces of the bearing rings need to be stronger than is currently achievable using available case-hardenable alloys.

Furthermore, the requirements for corrosion resistance come from the environmental aspects, such as humidity, and the use of lubricants which may comprise aggressive chemicals.

The core microstructure of a steel alloy forming an alloy component preferably has a low content of the δ-ferrite phase. This is because an excessive amount of δ-ferrite can compromise the toughness of the core microstructure and, hence, the toughness and through cracking resistance of the bearing ring. The reduction in impact toughness due to the presence of δ-ferrite is described, for example, by A. Rajasekhar in "Influence of Microstructure on Mechanical Properties of Martensitic Stainless Steel Welds", Journal of Mechanical and Civil Engineering Volume 12, Issue 2 Ver. VI (Mar - Apr. 2015), pp 05-10 and by Ye. A. Sagalevich, Ya. M. Potak, and V. V. Sachkov in "Effect of Delta-Ferrite on the Properties of Low Carbon Martensitic Stainless Steels", Moscow. Tsentral'nyy Nauchnolssledovatel'skiy Institut Chernoy Metallurgii. Sbornik Trudov (Moscow. Central Scientific Research Institute of Ferrous Metallurgy. Collected Papers), 1968, No. 63, pp. 90-95. The negative effect of high δ-ferrite contents on the ductile-to-brittle transition temperature is described, for example, by D. Carrouge, H. K. D. H. Bhadeshia and P. Woollin in "Effect of δ-ferrite on impact properties of supermartensitic stainless steel heat affected zones", Science and Technology of Welding and Joining 2004 Vol. 9 No. 5 pp 377-389.

GB2553583 describes a stainless steel alloy for a bearing, the alloy having a composition comprising: from 0.04 to 0.1 wt.% carbon, from 10.5 to 13.0 wt.% chromium, from 1.5 to 3.75 wt.% molybdenum, from 0.3 to 1.2 wt.% vanadium, from 0.3 to 2.0 wt.% nickel, from 6 to 9 wt.% cobalt, from 0.05 to 0.4 wt.% silicon, from 0.2 to 0.8 wt.% manganese, from 0.02 to 0.06 wt.% niobium, from 0 to 2.5 wt.% copper, from 0 to 0.1 wt.% aluminium, from 0 to 250 ppm nitrogen, from 0 to 30 ppm boron, and the balance iron, together with any unavoidable impurities. However, the microstructures of such alloys can possibly contain large amount of δ-ferrite, typically in excess of 9 vol.% δ-ferrite. As a result, the mechanical properties, such as toughness, are often insufficient for the steel alloys to be used in hybrid bearings for aerospace applications. US 2018/073113 A1 relates to a case-hardenable stainless steel alloy.

It is an objective of the present invention to address or at least mitigate some of the problems associated with the prior art and to provide a stainless steel alloy for use in the manufacture of case-hardened bearing components, which results in high surface strength in combination with excellent core toughness and corrosion resistance.

### Summary

In a first aspect, the present invention provides a steel alloy comprising:
from 0.05 to 0.25 wt.% carbon,
from 10 to 14 wt.% chromium,
from 1.5 to 4 wt.% molybdenum,
from 0.3 to 1.2 wt.% vanadium,
from 0.3 to 3 wt.% nickel,
from 6 to 11 wt.% cobalt
from 0.05 to 0.4 wt.% silicon,
from 0.1 to 1 wt.% manganese,
from 0.02 to 0.06 wt.% niobium,
optionally one or more of the following elements
from 0 to 2.5 wt.% copper
from 0 to 0.1 wt.% aluminium,
from 0 to 250 ppm nitrogen,
from 0 to 30 ppm boron, and
the balance iron, together with any unavoidable impurities, wherein the alloy has a Ni_{eq} of greater than 11.5, the Ni_{eq} being defined by the formula Ni_{eq} = Ni + Co + (0.5 x Mn) + (30 x C), in wt.%.

The steel alloy may be a bearing steel alloy. The steel alloy may exhibit a favourable combination of high hardness, high temperature resistance and high corrosion resistance, and is particularly suitable for use in, for example, hybrid bearings for aerospace engine applications.

The present invention will now be further described. In the following passages different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

The composition has a Ni_{eq} ("nickel equivalent") of greater than 11.5, the Ni_{eq} being defined by the formula Ni_{eq} = Ni + Co + (0.5 x Mn) + (30 x C), in wt.% (i.e. nickel content + cobalt content + 0.5 x manganese content + 30 x carbon content, in wt.%). Preferably, the Ni_{eq} is from 11.6 to 17, more preferably from 11.7 to 16, even more preferably from 12 to 15. In a preferred embodiment the alloy has a Nieq of greater than 14.4, preferably from 14.5 to 15. Such Ni_{eq} values may result in the steel exhibiting a microstructure having a low content of δ-ferrite, typically less than 3 vol.% δ-ferrite. Such a low content of δ-ferrite may result in the steel exhibiting favourable mechanical properties, in particular a high toughness.

The steel alloy composition comprises from 0.05 to 0.25 wt.% carbon. In combination with the other alloying elements, this may result in the desired microstructure (e.g. as-quenched martensite matrix) and mechanical properties conducive to bearing applications. The steel alloy is adapted for case-hardening, whereby the case is enriched with carbon or nitrogen or carbon plus nitrogen.

In a preferred embodiment ("high-carbon embodiment"), the steel alloy composition comprises from greater than 0.1 wt.% carbon to 0.25 wt.% carbon (i.e. 0.1 wt.% < carbon ≤ 0.25 wt.%), preferably from 0.11 to 0.2 wt.% carbon, more preferably from 0.12 to 0.19 wt.% carbon, even more preferably from 0.13 to 0.18 wt.% carbon. Such carbon contents may help to provide the favourable microstructure having a low content of δ-ferrite, typically less than 3 vol.% δ-ferrite.

In another preferred embodiment ("low-carbon embodiment") the steel alloy composition comprises from 0.05 to 0.09 wt.% carbon, preferably from 0.06 to 0.08 wt.% carbon or from 0.07 to 0.08 wt.% carbon. While such carbon contents may result in the steel exhibiting a lower strength, it may increase the martensite start temperature (Ms) of the core austenite upon quenching during hardening. The high martensite start temperature of the core, relative to that of the case, ensures obtaining a good compressive residual stress profile within a bearing component formed of the steel.

The steel alloy composition comprises from 10 to 14 wt.% chromium, preferably from 10.5 to 13 wt.% chromium, more preferably from 10.7 to 12.8 wt.% chromium, even more preferably from 11 to 12.5 wt.% chromium. Chromium is known to be beneficial in terms of corrosion resistance and a stainless steel must contain at least approximately 10 wt.% chromium in order to be classed as a stainless steel. Chromium may serve to maintain a high hardness of the steel alloy at elevated temperatures, making the alloy suitable for use in aero-engines. The chromium content, in conjunction with the other alloying elements, particularly the molybdenum, may help to maximise the PREN number. Chromium is a ferrite stabiliser and, therefore, the content thereof is preferably such that the undesirable δ-ferrite phase in the core is not formed during heat treatment. The δ-ferrite phase, if present in the core, may cause an appreciable increase in the austenite carbon content, which in turn lowers the martensite start temperature. In addition, poor mechanical properties are expected when δ-ferrite is present in the core in significant quantities. For these reasons, the Cr content is chosen to be less than 14 wt.%, preferably less than 13 wt.%, more preferably less than 12.8 wt.%, even more preferably less than 12.5 wt.%.

The steel alloy composition comprises from 1.5 to 4 wt.% molybdenum, preferably from 2 to 3.9 wt.% molybdenum, more preferably from 2.5 to 3.8 wt.% molybdenum, even more preferably from 2.7 to 3.7 wt.% molybdenum. Molybdenum may serve to maintain a high hardness of the steel alloy at elevated temperatures, making the alloy suitable for use in aero-engines. Molybdenum may act to avoid austenite grain boundary embrittlement owing to impurities such as, for example, phosphorus. Molybdenum may also act to increase hardenability. Molybdenum has a greater effect than chromium on the PREN number. Accordingly, for a given Cr_{eq} ("chromium equivalent") number, the molybdenum and chromium contents are preferably balanced to minimise the occurrence of δ-ferrite in the core while maximising the PREN number. Molybdenum is a ferrite stabiliser and, therefore, the content thereof is preferably such that the δ-ferrite phase in the core is not formed during heat treatment. The δ-ferrite phase, if present in the core, may cause an appreciable increase in the austenite carbon content, which in turn lowers the martensite start temperature. In addition, poor mechanical properties are expected when δ-ferrite is present in the core in significant quantities.

As noted above, molybdenum and chromium affect the pitting resistance equivalent number (PREN), which is defined as PREN = Cr + 3.3 Mo +16 N (elements in wt.%). PREN is a well-known indication of the corrosion resistance of stainless steel in a chloride-containing environment. In general, the higher the PREN value the more corrosion resistant the steel. In the present invention, the steel alloy composition may have a PREN (core) of approximately 14.95 to approximately 27.6. The PREN number is preferably as high as possible, for example at least 18.5, preferably at least 19, more preferably at least 22.

When carbonitriding case hardening is applied, the increased nitrogen in solid solution in the case will result in a relatively higher PREN. It is thus anticipated that bearing components processed in this way will exhibit improved standstill corrosion resistance, compared with case-carburising only.

The steel alloy composition comprises from 0.3 to 1.2 wt.% vanadium, preferably from 0.35 to 1.1 wt.% vanadium, more preferably from 0.35 to 1 wt.% vanadium, even more preferably from 0.4 to 0.7 wt.% vanadium. The steel alloy composition may advantageously comprise from 0.65 to 1.2 wt.% vanadium. The addition of vanadium may be beneficial in terms of improved hot-hardness and also control of the microstructure's response during tempering. Vanadium may serve to maintain a high hardness of the steel alloy at elevated temperatures, making the alloy suitable for use in aero-engines. In addition, vanadium may be beneficial in ensuring a fine-grained structure. Too high a vanadium content may lock more carbon in MC-types of carbides, which may lead to the as-quenched martensite matrix exhibiting inadequate strength and hardness, which is unfavourable for bearing applications. In addition, vanadium is a ferrite stabiliser, so its content must be balanced with other austenite-stabilising elements.

The steel alloy composition comprises from 0.3 to 3 wt.% nickel, preferably from 0.3 to 1.9 wt.% nickel, more preferably from 0.4 to 1.8 wt.% nickel. Such relatively low nickel contents may ensure that the cobalt content may be favourably raised. The low carbon content of the core may ensure good toughness and the nickel content may therefore be reduced accordingly. Nickel is also a relatively expensive alloying element.

The steel alloy composition comprises from 6 to 11 wt.% cobalt, preferably from 7 to 10 wt.% cobalt, more preferably from 7.5 to 9.5 wt.% cobalt, even more preferably from 8.1 to 9.3 wt.% cobalt. Cobalt may serve to maintain a high hardness of the steel alloy at elevated temperatures, making the alloy suitable for use in aero-engines. Cobalt and nickel both contribute to the Ni_{eq} and, as such, are preferably balanced. For a given Ni_{eq}, the lower nickel content enables raising the cobalt content of the alloy. A higher cobalt content may be beneficial in terms of the formation of finer carbides in the structure with benefits in terms of higher hardness and strength. However, too high a cobalt content may depress the Ms temperature, resulting in difficulties in transforming austenite into martensite on quenching.

The steel alloy composition comprises from 0.05 to 0.4 wt.% silicon, preferably from 0.05 to 0.3 wt.% silicon, more preferably from 0.15 to 0.25 wt.% silicon. The presence of silicon in these ranges, in combination with the other alloying elements, may result in the desired microstructure with a minimum amount of retained austenite. Silicon may improve the tempering resistance of the steel microstructure and for this reason a minimum amount of 0.05 wt.% Si is added. Si may also contribute to the Cr_{eq}. Accordingly, too high a silicon content may result in more likelihood of stabilising the undesirable δ-ferrite phase in the core of the component. In addition, silicon may lower the elastic properties of the matrix. For these reasons, the maximum silicon content is 0.4 wt.%, preferably 0.3 wt.%, more preferably 0.25 wt.%.

The steel alloy composition comprises from 0.1 to 1 wt.% manganese, preferably from 0.13 to 0.7 wt.% manganese, more preferably from 0.14 to 0.6 wt.% manganese, even more preferably from 0.15 to 0.19 wt.% manganese. The manganese content is at least 0.1 wt.% since this, in combination with the other alloying elements, helps to achieve the desired microstructure and properties. Manganese also acts to improve hardenability. In addition, manganese acts to increase the stability of austenite relative to ferrite. However, manganese levels above about 1 wt.% may serve to increase the amount of retained austenite. This may lead to practical metallurgical issues such as stabilising the retained austenite too much, leading to potential problems with the dimensional stability of the bearing components.

The steel alloy composition comprises from 0.02 to 0.06 wt.% niobium, preferably from 0.025 to 0.055 wt.% niobium, more preferably from 0.03 to 0.05 wt.% niobium. The addition of niobium in such ranges is advantageous for preventing excessive austenite grain growth during case hardening or any subsequent hardening heat treatment. Furthermore, the presence of niobium facilitates precipitation of vanadium carbides when the steel alloy contains a sufficient amount of vanadium. In such embodiments, the steel alloy comprises from 0.3 to 1.2 wt.% vanadium. The alloy may then have a microstructure comprising both niobium-rich and vanadium-rich precipitates.

In a preferred embodiment, the steel alloy comprises from 2 to 3.9 wt.% molybdenum, preferably from 2.5 to 3.8 wt.% molybdenum, more preferably from 2.7 to 3.7 wt.% molybdenum; and/or from 0.35 to 1.1 wt.% vanadium, preferably from 0.35 to 1 wt.% vanadium, more preferably from 0.4 to 0.7 wt.% vanadium; and/or from 0.3 to 1.9 wt.% nickel, preferably from 0.4 to 1.8 wt.% nickel; and/or from 7 to 10 wt.% cobalt, preferably from 7.5 to 9.5 wt.% cobalt, more preferably from 8.1 to 9.3 wt.% cobalt; and/or from 0.05 to 0.3 wt.% silicon, preferably from 0.15 to 0.25 wt.% silicon; and/or from 0.13 to 0.7 wt.% manganese, preferably from 0.14 to 0.6 wt.% manganese, more preferably from 0.15 to 0.19 wt.% manganese; and/or from 0.025 to 0.055 wt.% niobium, preferably from 0.03 to 0.05 wt.% niobium.

In a preferred embodiment, the steel alloy comprises from 0.14 to 0.18 wt.% carbon, from 11.1 to 11.5 wt.% chromium, from 3.42 to 3.46 wt.% molybdenum, from 0.31 to 0.35 wt.% vanadium, from 0.41 to 0.45 wt.% nickel, from 9.1 to 9.3 wt.% cobalt, from 0.15 to 0.19 wt.% silicon, from 0.21 to 0.25 wt.% manganese, from 0.03 to 0.05 wt.% niobium, and the balance iron and any unavoidable impurities. In one example, the steel alloy comprises about 0.16 wt.% carbon, about 11.3 wt.% chromium, about 3.44 wt.% molybdenum, about 0.33 wt.% vanadium, about 0.43 wt.% nickel, about 9.2 wt.% cobalt, about 0.17 wt.% silicon, about 0.23 wt.% manganese, about 0.04 wt.% niobium, and the balance iron and any unavoidable impurities.

In another preferred embodiment, the steel alloy comprises from 0.09 to 0.13 wt.% carbon, from 11 to 11.4 wt.% chromium, from 3.55 to 3.65 wt.% molybdenum, from 0.53 to 0.57 wt.% vanadium, from 0.39 to 0.43 wt.% nickel, from 8.9 to 9.3 wt.% cobalt, from 0.14 to 0.18 wt.% silicon, from 0.14 to 0.18 wt.% manganese, from 0.03 to 0.05 wt.% niobium, and the balance iron and any unavoidable impurities. In one example, the steel alloy comprises about 0.11 wt.% carbon, about 11.2 wt.% chromium, about 3.6 wt.% molybdenum, about 0.55 wt.% vanadium, about 0.41 wt.% nickel, about 9.1 wt.% cobalt, about 0.16 wt.% silicon, about 0.16 wt.% manganese, about 0.04 wt.% niobium, and the balance iron and any unavoidable impurities.

In another preferred embodiment, the steel alloy comprises from 0.07 to 0.11 wt.% carbon, from 11.1 to 11.5 wt.% chromium, from 3.45 to 3.55 wt.% molybdenum, from 0.45 to 0.55 wt.% vanadium, from 1.75 to 1.85 wt.% nickel, from 8.6 to 9 wt.% cobalt, from 0.16 to 0.2 wt.% silicon, from 0.16 to 0.2 wt.% manganese, from 0.04 to 0.06 wt.% niobium, and the balance iron and any unavoidable impurities. In one example, the steel alloy comprises about 0.09 wt.% carbon, about 11.3 wt.% chromium, about 3.5 wt.% molybdenum, about 0.5 wt.% vanadium, about 1.8 wt.% nickel, about 8.8 wt.% cobalt, about 0.18 wt.% silicon, about 0.18 wt.% manganese, about 0.05 wt.% niobium, and the balance iron and any unavoidable impurities.

In another preferred embodiment, the steel alloy comprises from 0.04 to 0.07 wt.% carbon, from 13 to 14 wt.% chromium, from 2.5 to 3 wt.% molybdenum, from 0.47 to 0.57 wt.% vanadium, from 1.4 to 1.7 wt.% nickel, from 8 to 8.5 wt.% cobalt, from 0.15 to 0.19 wt.% silicon, from 0.45 to 0.55 wt.% manganese, from 0.02 to 0.04 wt.% niobium, and the balance iron and any unavoidable impurities. In one example, the steel alloy comprises about 0.054 wt.% carbon, about 13.4 wt.% chromium, about 2.74 wt.% molybdenum, about 0.53 wt.% vanadium, about 1.54 wt.% nickel, about 8.16 wt.% cobalt, about 0.17 wt.% silicon, about 0.51 wt.% manganese, about 0.032 wt.% niobium, and the balance iron and any unavoidable impurities.

The steel alloy may be further defined by the Cr_{eq} ("chromium equivalent"). The Cr_{eq} is defined as Cr + 2Si + 1.5Mo + 5V (wt.%) and may typically range from approximately 13.9 to approximately 26.8. The Cr_{eq} is preferably 18 to 20.5, more preferably 18.5 to 19.7. Cr_{eq} values within such ranges may increase the corrosion resistance of the steel.

As noted above, the steel alloy may optionally include one or more of the following elements: from 0 to 2.5 wt.% copper, from 0 to 0.1 wt.% aluminium, from 0 to 250 ppm nitrogen, and from 0 to 30 ppm boron.

The steel alloy may optionally include up to 2.5 wt.% copper, for example from 0.01 to 0.5 wt.% copper. Copper increases the alloy hardenability and corrosion resistance. However, its amount must be properly controlled as it is an austenite stabiliser. If present in levels in excess of 0.3 wt.%, the copper content is tied to that of nickel given that the wt.% ratio of Cu/Ni is preferably approximately 2 (plus or minus 0.2). This ensures that hot-shortness is mitigated. The addition of copper to the steel composition is perhaps less desirable when considering the VIM-VAR process route, owing to the element's high vapour pressure. However, in embodiments where the steel alloy composition is processed using VIM-ESR, the addition of copper can be made during the ESR process.

The steel alloy may optionally include up to 0.1 wt.% aluminium, for example from 0.005 to 0.05 wt.% aluminium, preferably from 0.01 to 0.03 wt.% aluminium. Aluminium may serve as a deoxidizer. However, the use of aluminium requires stringent steel production controls to ensure cleanliness with respect to non-metallic inclusions and this increases the processing costs. Therefore, the steel alloy comprises no more than 0.05 wt.% aluminium. However, the aluminium content will have to be reduced to a trace level and preferably kept to an absolute minimum if the alloy is manufactured by a powder metallurgical route or by spray-forming.

In some embodiments, nitrogen may be added such that the steel alloy comprises from 50 to 250 ppm nitrogen, preferably from 75 to 150 ppm nitrogen. The presence of nitrogen may be beneficial for promoting the formation of complex nitrides and/or carbonitrides. In other embodiments, there is no deliberate addition of nitrogen. Nevertheless, the alloy may necessarily still comprise at up to 50 ppm nitrogen. If the alloy is manufactured by a VIM-VAR processing route, the aluminium concentration may be in the range 0.01 to 0.03 wt.%, for example, and the nitrogen concentration may be in the range of 30 to 60 ppm. Both elements help in pinning austenite grain boundaries in the form of aluminium nitride precipitates, thus ensuring a finer-grained structure that is beneficial for demanding bearing applications.

The steel alloy may optionally include from 0 to 30 ppm boron. Boron may be added, for example, when increased hardenability is desired.

It will be appreciated that the steel alloy referred to herein may contain unavoidable impurities, although, in total, these are unlikely to exceed 0.3 wt.% of the composition. Preferably, the steels contain unavoidable impurities in an amount of not more than 0.1 wt.% of the composition, more preferably not more than 0.05 wt.% of the composition. In particular, the steel alloy may also include one or more impurity elements. A non-exhaustive list of impurities includes, for example: from 0 to 0.025 wt.% phosphorous from 0 to 0.015 wt.% sulphur from 0 to 0.04 wt.% arsenic from 0 to 0.075 wt.% tin from 0 to 0.075 wt.% antimony from 0 to 0.01 wt.% tungsten from 0 to 0.005 wt.% titanium from 0 to 0.002 wt.% lead The steel alloy preferably comprises little or no sulphur, for example from 0 to 0.015 wt.% sulphur. The steel alloy preferably comprises little or no potassium, for example from 0 to 0.025 wt.% potassium. The steel alloy preferably comprises ≤ 20 ppm oxygen. Oxygen may be present as an impurity. The steel alloy preferably comprises ≤ 30 ppm titanium. Titanium may be present as an impurity. The steel alloy preferably comprises ≤ 50 ppm Ca. Calcium may be present as an impurity.

The steel alloys according to the present invention consists of the elements recited in claim 1.

The steel alloys according to the present invention preferably have a microstructure comprising martensite (typically tempered martensite), (ii) carbides, and/or carbonitrides, and (iii) optionally some retained austenite. A low level of retained austenite is advantageous in that it improves dimensional stability of a bearing component. The microstructure may further comprise nitrides. As discussed above, advantageously there is little or none of the undesirable δ-ferrite phase in the microstructure, typically less than 3%.

The structure of the steels may be determined by conventional microstructural characterisation techniques such as, for example, light optical microscopy, TEM, SEM, AP-FIM, and X-ray diffraction, including combinations of two or more of these techniques.

In a reference example, the present disclosure provides a steel alloy comprising:
from greater than 0.1 to 0.25 wt.% carbon,
from 10 to 14 wt.% chromium,
from 1.5 to 4 wt.% molybdenum,
from 0.3 to 1.2 wt.% vanadium,
from 0.3 to 3 wt.% nickel,
from 6 to 11 wt.% cobalt
from 0.05 to 0.4 wt.% silicon,
from 0.1 to 1 wt.% manganese,
from 0.02 to 0.06 wt.% niobium,
optionally one or more of the following elements
from 0 to 2.5 wt.% copper
from 0 to 0.1 wt.% aluminium,
from 0 to 250 ppm nitrogen,
from 0 to 30 ppm boron, and
the balance iron, together with unavoidable impurities.

The preferable and optional features described in relation to the first aspect apply equally to this reference example. The microstructure of such an alloy may exhibit low levels of δ-ferrite, typically less than 3 vol.%. Accordingly, the alloy of this aspect of the present disclosure may exhibit similar favourable mechanical properties to that of the alloy of the first aspect.

In a further aspect, the present invention provides a bearing component formed from the steel alloy described herein. The bearing component may be at least one of a rolling element, an inner ring, and an outer ring.

A surface of the bearing component has preferably been case hardened, for example, by carburising, nitriding and/or carbonitriding, preferably by carbonitriding. Following case hardening, the carbon level at the surface of the component is preferably, for example, from 0.5 to 2.5 wt.%.

In a further aspect, the present invention provides a bearing comprising the bearing component as described herein. The bearing is preferably a hybrid bearing, more preferably wherein the bearing component is an inner ring and/or outer ring and the bearing comprises rolling elements made of a ceramic material.

In a further aspect, the present invention provides a process for the manufacture of a bearing component, the process comprising:
(i) providing a steel alloy as described herein;
(ii) forming a bearing component from the steel alloy; and
(iii) case-hardening the component.

The steel alloy itself may be formed using a processing route that is selected from: vacuum induction melting (VIM); vacuum arc remelting (VAR); electroslag remelting (ESR) or a combination thereof. Powder metallurgy (PM) processing is also possible. The powder metallurgical route would typically require the application of hot isostatic pressing (HIP) of the metal powder for optimal density. The HIP process may be preceded by cold isostatic pressing (CIP). The steel alloy may be formed by spray-forming. Furthermore, if a deliberately high nitrogen content in the substrate alloy composition is desired, the VIM then P-ESR processes may then be used. In addition, the core alloy, by virtue of being low in carbon, may also be 3D printed. These are also conventional manufacturing techniques such as forging or rolling. The aluminium content is reduced to trace level and preferably kept to a minimum in the PM or the spray-formed alloy variant. For the VIM-VAR variant, the aluminium concentration can be in the range of 0.01 to 0.03 wt.%. The nitrogen concentration can be in the range of 30 to 60 ppm. Both elements help in pinning austenite grain boundaries in the form of aluminium nitride precipitates, thus ensuring a finer-grained structure that is beneficial for demanding bearing applications. The alloy is preferably formed by a VIM-VAR or PM method.

The forging process of the steel articles is controlled such that the grain sizes are sufficiently fine for the subsequent carburising or carbonitriding process not to result in the formation of excessively large grain boundary carbides. For example, the grain sizes may typically range from 15 to 85 µm.

The step of case-hardening may be conducted, for example, by diffusing carbon (carburisation), nitrogen (nitriding), carbon and nitrogen (carbonitriding) and/or boron (boriding) into the outer layer of the steel at an elevated temperature. These are therefore thermochemical processes. Such processes are known in the art. They are typically followed by a further heat-treatment to achieve the desired hardness profile and the desired properties in the case and in the core. Case-hardening is preferably carried out at reduced pressure (less than the atmospheric pressure), with the possible inclusion of a suitable preoxidation step. For example, clean bearing components may be heated in air at 875 to 1050°C for 1 hour, followed by air cooling.

In one embodiment, the method comprises case-carburising. Vacuum carburising, gas carburising, liquid carburising or solid (pack) carburising may be applied. Each of these processes relies on the transformation of austenite into martensite on quenching. The increase in carbon content at the surface must be high enough to give a martensitic layer with sufficient hardness, typically approximately 750HV, to provide a wear-resistant surface. The required carbon content at the surface after diffusion is typically 0.5 to 2.5 wt.%. Carburising may be conducted at a temperature in the range of 870 to 1100°C in a carbon-containing medium. Such carburising treatments are conventional in the art and ensure sufficient carbon-enrichment in the carburised case such that there is adequate ΔMs (of the austenite) between the core and the case. This, in turn, ensures the development of a beneficial compressive residual stress profile through the thickness of the bearing component's hardened case and towards the core.

In a further embodiment, the method comprises carbonitriding. A nitrogen source such as ammonia may be introduced into the furnace atmosphere during carburising. The inclusion of ammonia can be applied through both low pressure carbonitriding and gas carbonitriding.

Carbonitriding, when applied to a component that is made from a steel alloy according to the invention, has a number of advantages. The total process time maybe shortened. In addition, better corrosion resistance of bearing components is achieved, especially during standstill in humid environments, due to the nitrogen element being in solid solution in the hardened case.

In a further embodiment, the step of case hardening comprises both carburisation and carbonitriding. This embodiment is advantageous for components which require a relatively large case depth.

The case-hardened steel alloy exhibits high hardness, excellent corrosion resistance and/or dimensional stability.

After case-carburising, or carbonitriding, or the combination of both, the bearing components are typically hardened and tempered. After the first temper, the parts may be deep-frozen at near liquid nitrogen temperature then re-tempered. Again, such treatments are conventional in the art.

The heat treatment consists of austenitisation at, for example, about 1100°C, followed by an oil or gas quench. Tempering can be double or, if necessary, even triple-tempering or more, with sub-zero treatments in-between the temper steps

For exceptional resistance to rolling contact fatigue, the case-hardened and tempered bearing components may be followed by surface nitriding or boriding, for example, to further increase the surface hardness of the bearing components. This is particularly applicable to the surface hardness of bearing raceways. Thus, in a preferred embodiment, once a surface of the bearing component has been case-carburised, the surface may be subjected to a surface nitriding treatment to further improve the mechanical properties of the surface layer.

The steel alloy or bearing component may be subjected to a surface finishing technique. For example, burnishing, especially for raceways, followed by, if necessary, tempering and air-cooling. Afterwards, the steel alloy or bearing component may be finished by means of hard-turning and/or finishing operations such as, for example, grinding, lapping and honing.

The burnishing and tempering operations may cause the yield strength of the affected areas to increase with significant improvement in hardness, compressive residual stress and better resistance to rolling contact fatigue.

The invention will now be described further, by way of examples, with reference to a number of non-limiting embodiments of steel alloys according to the invention, with reference to a suitable heat treatment for the steel alloys; and with reference to the accompanying drawings, in which:
Figure 1 shows plots of Ni_{eq} against Cr_{eq} for a number of steel alloys according to the present invention and a number of steel alloys according to reference examples.
Figure 2 shows results of thermodynamic modelling for a steel with a high δ-ferrite content.
Figure 3 shows results of thermodynamic modelling for a steel with a low δ-ferrite content.

### Examples

A number of steel alloys were prepared having the compositions listed in Table 1.

**Table 1 - The chemical compositions of a number of steel alloys according to the invention and a number of reference example alloys*. All quantities are in wt.%. The balance is iron, together with any unavoidable impurities.**

| Steel | C | Si | Mn | Cr | Mo | Ni | V | Nb | Co | Nieq |
|---|---|---|---|---|---|---|---|---|---|---|
| P675^{*} | 0.07 | 0.40 | 0.65 | 13.0 | 1.8 | 2.6 | 0.6 | | 5.4 | 10.4 |
| A* | 0.076 | 0.18 | 0.47 | 12.42 | 2.0 | 0.53 | 0.6 | 0.032 | 7.2 | 10.3 |
| B2* | 0.069 | 0.16 | 0.47 | 12.05 | 2.5 | 1.04 | 0.5 | 0.030 | 7.23 | 10.6 |
| B3* | 0.054 | 0.16 | 0.47 | 11.19 | 3.46 | 1.02 | 0.51 | 0.033 | 7.18 | 10.1 |
| B4* | 0.050 | 0.15 | 0.47 | 12.37 | 2.49 | 1.83 | 0.51 | 0.033 | 6.51 | 10.1 |
| B5 | 0.09 | 0.18 | 0.18 | 11.3 | 3.5 | 1.8 | 0.5 | 0.05 | 8.8 | 13.4 |
| C2 | 0.054 | 0.17 | 0.51 | 13.4 | 2.74 | 1.54 | 0.53 | 0.032 | 8.16 | 11.6 |
| C4* | 0.040 | 0.16 | 0.47 | 11.31 | 3.48 | 0.54 | 0.51 | 0.033 | 8.47 | 10.4 |
| D2* | 0.050 | 0.21 | 0.68 | 11.45 | 1.82 | 0.56 | 1.01 | 0.034 | 8.06 | 10.5 |
| C5 | 0.16 | 0.17 | 0.23 | 11.3 | 3.44 | 0.43 | 0.33 | 0.04 | 9.2 | 14.5 |
| C6 | 0.11 | 0.16 | 0.16 | 11.2 | 3.6 | 0.41 | 0.55 | 0.04 | 9.1 | 12.6 |

The δ-ferrite contents of the steel alloys were determined by optical microscopy, using techniques known in the art. The steel alloys according to the invention had δ-ferrite contents of less than 3 vol.%, whereas some of the steel alloys according to the reference examples had δ-ferrite contents in excess of 9 vol.%. In addition, the δ-ferrite contents of alloys containing greater than 0.1 wt.% carbon are always low.

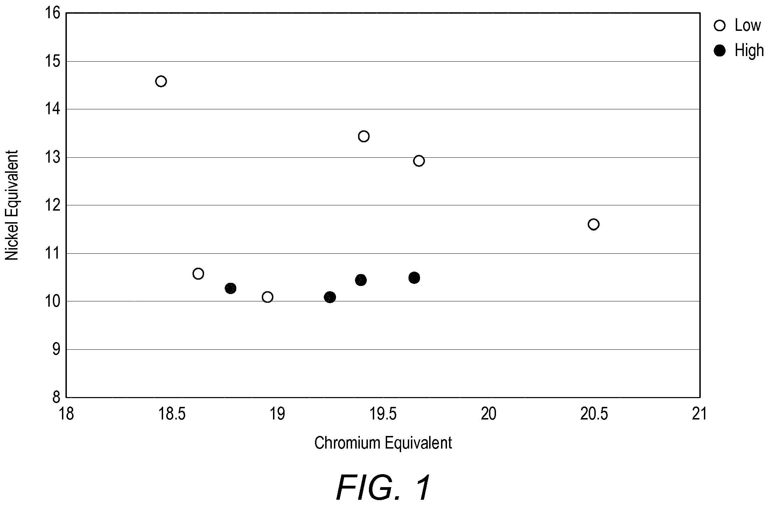

Plots of Ni_{eq} against Cr_{eq} are shown in Figure 1. Below Ni_{eq} values of about 11.5 the δ-ferrite contents can be either high or low, whereas above Ni_{eq} values of about 11.5 the δ-ferrite contents are always low.

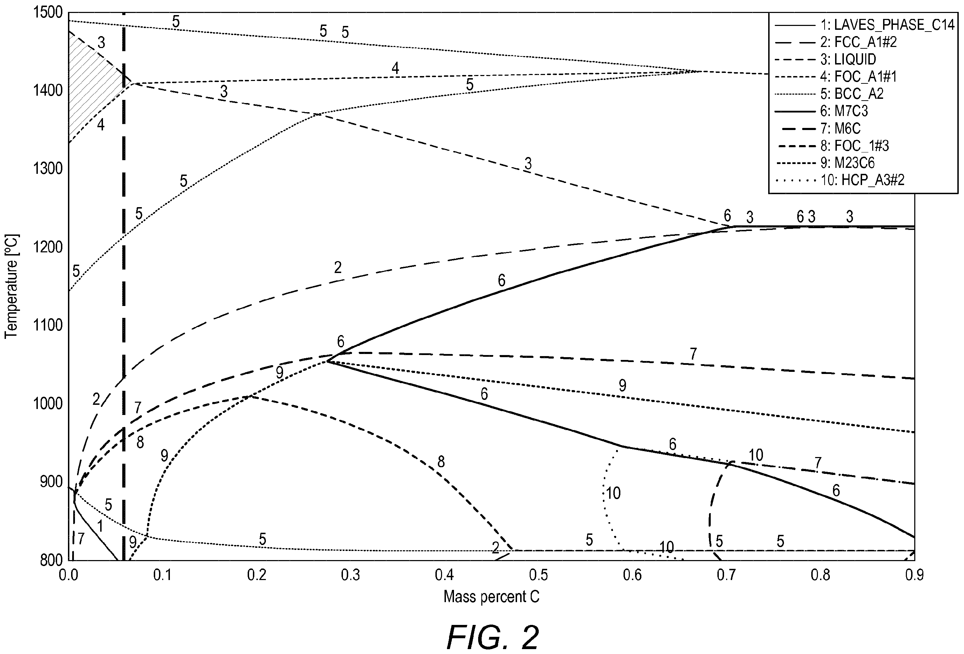

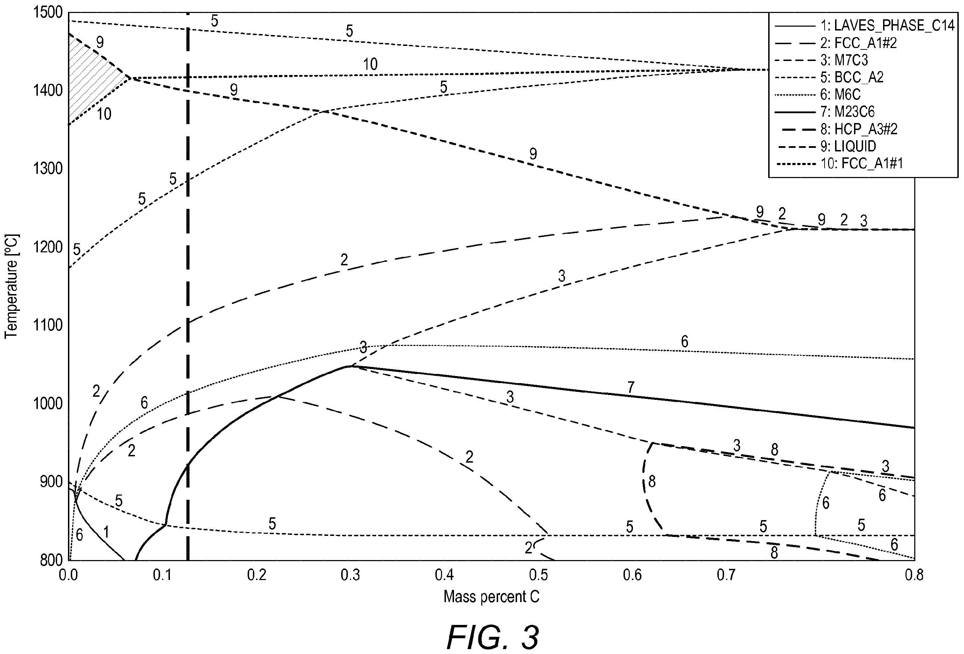

Thermodynamic modelling of the compositions shows the effect of alloying on the size of the δ-ferrite phase field and the proximity of the composition to this phase field. Figure 2 is a graph for a steel with a high δ-ferrite content. It can be seen that the dashed vertical line representing the steel composition actually goes through the grey shaded δ-ferrite phase field. Figure 3 is a graph for a steel with a low δ-ferrite content and it is clear that the dashed vertical line representing this steel composition is further away from the shaded δ-ferrite phase field.

The steel alloys according to the invention underwent carburising, rehardening and tempering (secondary hardening). The surface hardness of the steel alloys was found to be between HV 820 and HV850, i.e. higher than the values of HV 750 or HV 780 for standard carburised Pyrowear 675.

## Claims

1. A steel alloy comprising:
from 0.05 to 0.25 wt.% carbon,
from 10 to 14 wt.% chromium,
from 1.5 to 4 wt.% molybdenum,
from 0.3 to 1.2 wt.% vanadium,
from 0.3 to 3 wt.% nickel,
from 6 to 11 wt.% cobalt
from 0.05 to 0.4 wt.% silicon,
from 0.1 to 1 wt.% manganese,
from 0.02 to 0.06 wt.% niobium,
optionally one or more of the following elements
from 0 to 2.5 wt.% copper
from 0 to 0.1 wt.% aluminium,
from 0 to 250 ppm nitrogen,
from 0 to 30 ppm boron, and
the balance iron, together with any unavoidable impurities,
wherein the alloy has a Ni_{eq} of greater than 11.5, the Ni_{eq} being defined by the formula Ni_{eq} = Ni + Co + (0.5 x Mn) + (30 x C), in wt.%.

2. The steel alloy of claim 1, wherein the Ni_{eq} is from 11.6 to 17, preferably from 11.7 to 16, more preferably from 12 to 15.

3. The steel alloy of claim 1 or claim 2 comprising from greater than 0.1 wt.% carbon to 0.25 wt.% carbon, preferably from 0.11 to 0.2 wt.% carbon, more preferably from 0.12 to 0.19 wt.% carbon, even more preferably from 0.13 to 0.18 wt.% carbon.

4. The steel alloy of claim 1 or claim 2 comprising from 0.05 to 0.09 wt.% carbon, preferably from 0.06 to 0.08 wt.% carbon.

5. The steel alloy of any preceding claim comprising from 10.5 to 13 wt.% chromium, preferably from 10.7 to 12.8 wt.% chromium, more preferably from 11 to 12.5 wt.% chromium.

6. The steel alloy of any preceding claim comprising:
from 2 to 3.9 wt.% molybdenum, preferably from 2.5 to 3.8 wt.% molybdenum, more preferably from 2.7 to 3.7 wt.% molybdenum; and/or
from 0.35 to 1.1 wt.% vanadium, preferably from 0.35 to 1 wt.% vanadium, more preferably from 0.4 to 0.7 wt.% vanadium; and/or
from 0.3 to 1.9 wt.% nickel, preferably from 0.4 to 1.8 wt.% nickel; and/or
from 7 to 10 wt.% cobalt, preferably from 7.5 to 9.5 wt.% cobalt, more preferably from 8.1 to 9.3 wt.% cobalt; and/or
from 0.05 to 0.3 wt.% silicon, preferably from 0.15 to 0.25 wt.% silicon; and/or
from 0.13 to 0.7 wt.% manganese, preferably from 0.14 to 0.6 wt.% manganese, more preferably from 0.15 to 0.19 wt.% manganese; and/or
from 0.025 to 0.055 wt.% niobium, preferably from 0.03 to 0.05 wt.% niobium.

7. A bearing component formed from the steel alloy of any of claims 1 to 6, preferably wherein the bearing component is at least one of a rolling element, an inner ring, and an outer ring.

8. The bearing component of claim 7, wherein a surface of the bearing component has been case hardened, preferably by carburising, nitriding and/or carbonitriding.

9. A bearing comprising a bearing component as defined in claim 7 or 8, preferably wherein the bearing component is an inner and/or outer ring and the bearing comprises rolling elements made of a ceramic material.

10. A process for the manufacture of a bearing component, the process comprising:
(i) providing a steel alloy as defined in any one of claims 1 to 6;
(ii) forming a bearing component from the steel alloy; and
(iii) case hardening the component.

## Patentansprüche

1. Stahllegierung, umfassend:
0,05 bis 0,25 Gew.-% Kohlenstoff,
10 bis 14 Gew.-% Chrom,
1,5 bis 4 Gew.-% Molybdän,
0,3 bis 1,2 Gew.-% Vanadium,
0,3 bis 3 Gew.-% Nickel,
6 bis 11 Gew.-% Cobalt,
0,05 bis 0,4 Gew.-% Silicium,
0,1 bis 1 Gew.-% Mangan,
0,02 bis 0,06 Gew.-% Niob,
gegebenenfalls eines oder mehrere der folgenden Elemente
0 bis 2,5 Gew.-% Kupfer,
0 bis 0,1 Gew.-% Aluminium,
0 bis 250 ppm Stickstoff,
0 bis 30 ppm Bor, und
Resteisen, zusammen mit jeglichen unvermeidbaren Verunreinigungen,
wobei die Legierung ein Ni_{eq} von mehr als 11,5 aufweist, wobei Ni_{eq} durch die Formel Ni_{eq} = Ni + Co + (0,5 × Mn) + (30 × C) in Gew.-% definiert ist.

2. Stahllegierung nach Anspruch 1, wobei das Ni_{eq} 11,6 bis 17, vorzugsweise 11,7 bis 16 und weiter bevorzugt 12 bis 15 beträgt.

3. Stahllegierung nach Anspruch 1 oder Anspruch 2, umfassend mehr als 0,1 Gew.-% Kohlenstoff bis 0,25 Gew.-% Kohlenstoff, vorzugsweise 0,11 bis 0,2 Gew.-% Kohlenstoff, weiter bevorzugt 0,12 bis 0,19 Gew.-% Kohlenstoff, noch weiter bevorzugt 0,13 bis 0,18 Gew.-% Kohlenstoff.

4. Stahllegierung nach Anspruch 1 oder 2, umfassend 0,05 bis 0,09 Gew.-% Kohlenstoff, vorzugsweise 0,06 bis 0,08 Gew.-% Kohlenstoff.

5. Stahllegierung nach einem der vorhergehenden Ansprüche, umfassend 10,5 bis 13 Gew.-% Chrom, vorzugsweise 10,7 bis 12,8 Gew.-% Chrom, weiter bevorzugt 11 bis 12,5 Gew.-% Chrom.

6. Stahllegierung nach einem der vorhergehenden Ansprüche, umfassend:
2 bis 3,9 Gew.-% Molybdän, vorzugsweise 2,5 bis 3,8 Gew.-% Molybdän, weiter bevorzugt 2,7 bis 3,7 Gew.-% Molybdän; und/oder
0,35 bis 1,1 Gew.-% Vanadium, vorzugsweise 0,35 bis 1 Gew.-% Vanadium, weiter bevorzugt 0,4 bis 0,7 Gew.-% Vanadium; und/oder
0,3 bis 1,9 Gew.-% Nickel, vorzugsweise 0,4 bis 1,8 Gew.-% Nickel; und/oder
7 bis 10 Gew.-% Cobalt, vorzugsweise 7,5 bis 9,5 Gew.-% Cobalt, weiter bevorzugt 8,1 bis 9,3 Gew.-% Cobalt; und/oder
0,05 bis 0,3 Gew.-% Silicium, vorzugsweise 0,15 bis 0,25 Gew.-% Silicium; und/oder
0,13 bis 0,7 Gew.-% Mangan, vorzugsweise 0,14 bis 0,6 Gew.-% Mangan, weiter bevorzugt 0,15 bis 0,19 Gew.-% Mangan; und/oder
0,025 bis 0,055 Gew.-% Niob, vorzugsweise 0,03 bis 0,05 Gew.-% Niob.

7. Lagerbauteil aus der Stahllegierung nach einem der Ansprüche 1 bis 6, vorzugsweise wobei es sich bei dem Lagerbauteil um einen Wälzkörper, einen Innenring und/oder einen Außenring handelt.

8. Lagerbauteil nach Anspruch 7, wobei eine Oberfläche des Lagerbauteils einsatzgehärtet wurde, vorzugsweise durch Aufkohlen, Nitrieren oder Carbonitrieren.

9. Lager, umfassend ein Lagerbauteil gemäß Anspruch 7 oder 8, vorzugsweise wobei sich bei dem Lagerbauteil um einen Innen- und/oder Außenring handelt und das Lager Wälzkörper aus einem Keramikmaterial umfasst.

10. Verfahren zur Herstellung eines Lagerbauteils, wobei das Verfahren Folgendes umfasst:
(i) Bereitstellen einer Stahllegierung gemäß einem der Ansprüche 1 bis 6;
(ii) Bilden eines Lagerbauteils aus der Stahllegierung; und
(iii) Einsatzhärten des Bauteils.

## Revendications

1. Alliage d'acier comprenant :
de 0,05 à 0,25 % en poids de carbone,
de 10 à 14 % en poids de chrome,
de 1,5 à 4 % en poids de molybdène,
de 0,3 à 1,2 % en poids de vanadium,
de 0,3 à 3 % en poids de nickel,
de 6 à 11 % en poids de cobalt
de 0,05 à 0,4 % en poids de silicium,
de 0,1 à 1 % en poids de manganèse,
de 0,02 à 0,06 % en poids de niobium,
éventuellement un ou plusieurs des éléments suivants :
de 0 à 2,5 % en poids de cuivre
de 0 à 0,1 % en poids d'aluminium,
de 0 à 250 ppm d'azote,
de 0 à 30 ppm de bore, et
le reste étant du fer, ainsi que toutes les impuretés inévitables,
l'alliage ayant un Ni_{eq} supérieur à 11,5, le Ni_{eq} étant défini par la formule Ni_{eq} = Ni + Co + (0,5 × Mn) + (30 × C), en % en poids.

2. Alliage d'acier selon la revendication 1, le Ni_{eq} étant compris entre 11,6 et 17, de préférence entre 11,7 et 16, plus préférablement entre 12 et 15.

3. Alliage d'acier selon la revendication 1 ou la revendication 2, comprenant de plus de 0,1 % en poids de carbone à 0,25 % en poids de carbone, de préférence de 0,11 à 0,2 % en poids de carbone, plus préférablement de 0,12 à 0,19 % en poids de carbone, encore plus préférablement de 0,13 à 0,18 % en poids de carbone.

4. Alliage d'acier selon la revendication 1 ou la revendication 2, comprenant de 0,05 à 0,09 % en poids de carbone, de préférence de 0,06 à 0,08 % en poids de carbone.

5. Alliage d'acier selon l'une quelconque des revendications précédentes, contenant de 10,5 à 13 % en poids de chrome, de préférence de 10,7 à 12,8 % en poids de chrome, plus préférablement de 11 à 12,5 % en poids de chrome.

6. Alliage d'acier selon n'importe quelle revendication précédente comprenant :
de 2 à 3,9 % en poids de molybdène, de préférence de 2,5 à 3,8 % en poids de molybdène, plus préférablement de 2,7 à 3,7 % en poids de molybdène ; et/ou
de 0,35 à 1,1 % en poids de vanadium, de préférence de 0,35 à 1 % en poids de vanadium, plus préférablement de 0,4 à 0,7 % en poids de vanadium ; et/ou
de 0,3 à 1,9 % en poids de nickel, de préférence de 0,4 à 1,8 % en poids de nickel ; et/ou
de 7 à 10 % en poids de cobalt, de préférence de 7,5 à 9,5 % en poids de cobalt, plus préférablement de 8,1 à 9,3 % en poids de cobalt ; et/ou
de 0,05 à 0,3 % en poids de silicium, de préférence de 0,15 à 0,25 % en poids de silicium ; et/ou
de 0,13 à 0,7 % en poids de manganèse, de préférence de 0,14 à 0,6 % en poids de manganèse, plus préférablement de 0,15 à 0,19 % en poids de manganèse ; et/ou
de 0,025 à 0,055 % en poids de niobium, de préférence de 0,03 à 0,05 % en poids de niobium.

7. Composant de roulement formé à partir de l'alliage d'acier selon l'une quelconque des revendications 1 à 6, de préférence le composant de roulement étant au moins un élément parmi un élément roulant, une bague intérieure et une bague extérieure.

8. Composant de roulement selon la revendication 7, une surface du composant de roulement ayant été cémentée, de préférence par carburation, nitruration et/ou carbonitruration.

9. Roulement comprenant un composant de roulement selon la revendication 7 ou 8, de préférence le composant de roulement étant une bague intérieure et/ou extérieure et le roulement comprenant des éléments roulants en matériau céramique.

10. Procédé de fabrication d'un composant de roulement, le procédé comprenant :
(i) la fourniture d'un alliage d'acier selon l'une quelconque des revendications 1 à 6 ;
(ii) la formation d'un composant de roulement à partir de l'alliage d'acier ; et
(iii) la cémentation du composant.
